(19) Europäisches Patentamt
European Patent Office
Office européen des brevets

(11) **EP 4 096 144 A1**

(12) **DEMANDE DE BREVET EUROPEEN**

(43) Date de publication:
**30.11.2022 Bulletin 2022/48**

(21) Numéro de dépôt: **22173958.4**

(22) Date de dépôt: **18.05.2022**

(51) Classification Internationale des Brevets (IPC):
**H04L 9/00** *(2022.01)* **H04L 9/06** *(2006.01)*
**G09C 1/00** *(2006.01)*

(52) Classification Coopérative des Brevets (CPC):
**H04L 9/004; G09C 1/00; H04L 9/0618**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **26.05.2021 FR 2105447**

(71) Demandeur: **IDEMIA France
92400 Courbevoie (FR)**

(72) Inventeurs:
• **CASTELNOVI, Laurent
92400 COURBEVOIE (FR)**
• **BARBU, Guillaume
92400 COURBEVOIE (FR)**
• **BETTALE, Luk
92400 COURBEVOIE (FR)**
• **CHABRIER, Thomas
92400 COURBEVOIE (FR)**
• **DEBANDE, Nicolas
92400 COURBEVOIE (FR)**
• **GIRAUD, Christophe
92400 COURBEVOIE (FR)**
• **REBOUD, Nathan
92400 COURBEVOIE (FR)**

(74) Mandataire: **Santarelli
49, avenue des Champs-Elysées
75008 Paris (FR)**

(54) **CONTREMESURES PAR INFECTION AMÉLIORÉES**

(57) L'invention propose un nouveau type de contre-mesures par infection contre des attaques par injection de fautes. Au lieu de déterminer l'erreur injectée avant de l'amplifier, la nouvelle contremesure applique une même fonction de diffusion à deux chiffrés intermédiaires obtenus en exécutant une opération cryptographique sur une entrée. L'erreur est donc amplifiée au sein même des chiffrés intermédiaires, dénommés chiffrés infectants après diffusion. On peut désormais utiliser des fonctions de diffusion ne mappant pas le chiffré 0 en une sortie égale à 0. Un chiffré recomposé à partir des bits des chiffrés sans diffusion est également généré. Ces chiffrés infectants et recomposé sont XOR-combinés pour fournir un chiffré de sortie. Cette approche permet d'adapter, par simple duplication des paires et fonctions de diffusion spécifiques associées, la protection offerte par la contremesure à un nombre souhaité de fautes injectées.

Fig. 4

## Description

### Domaine technique

La présente invention concerne le domaine de la sécurité informatique. Elle concerne plus particulièrement la sécurisation de procédés, traitements ou opérations cryptographiques.

### Technique antérieure

Certains procédés de traitement de données, en particulier dans le cadre du traitement cryptographique (par exemple, chiffrement ou déchiffrement) de données, utilisent des algorithmes cryptographiques basés sur un ou plusieurs secrets ou clés cryptographiques. Des exemples d'opérations cryptographiques incluent la signature numérique d'un message ou son chiffrement, en une donnée de sortie (donnée binaire) appelée « texte chiffre », « message chiffré » ou tout simplement « chiffré » (« ciphertext » en langue anglo-saxonne). D'autres exemples incluent le déchiffrement d'un chiffré, en une donnée de sortie appelée message « clair » ou « en clair » (« cleartext » en langue anglo-saxonne). Les grandes classes d'opérations cryptographiques incluent les algorithmes de chiffrement/déchiffrement symétriques ou à clé secrète (par exemple AES, DES), les algorithmes de chiffrement/déchiffrement asymétriques ou à clés publique et privée (par exemple RSA, DSA), et les fonctions de hachage (par exemple MD5 et SHA-3).

Les secrets ou clés cryptographiques ne doivent pas être accessibles. Aussi, les traitements cryptographiques sont généralement mis en œuvre au sein de systèmes cryptographiques sécurisés dotés de cryptoprocesseurs, systèmes tels que des éléments sécurisés (SE), c'est-à-dire des plates-formes matérielles sécurisées capables de contenir des données en conformité avec les règles et les exigences de sécurité fixées par des autorités de confiance. Les éléments sécurisés peuvent être embarqués (embedded SE ou eSE) ou amovibles, et incluent notamment les cartes à puce, les cartes UICC (ou eUICC).

Ces procédés sont la cible d'attaques de la part d'utilisateurs malveillants qui cherchent à déjouer la sécurité du système.

Parmi ces attaques, on connaît les attaques du type par génération de fautes qui consistent à perturber volontairement l'exécution normale du procédé de traitement de données afin d'obtenir en sortie du procédé des données (messages) différentes de celles normalement attendues mais révélatrices d'informations sur les données secrètes utilisées dans l'algorithme cryptographique. Ces attaques peuvent porter sur des composants matériels (cryptoprocesseur) ou logiciels du système.

Des contremesures ont ainsi été proposées pour lutter contre ce type d'attaques.

On connaît les contremesures par détection (ou « *detective countermeasures* » en langue anglo-saxonne) qui sont principalement basée sur une exécution redondante de l'algorithme cryptographique et la comparaison des résultats de l'exécution principale et de l'exécution redondante. En cas de comparaison erronée, le procédé est interrompu et une action sécuritaire est engagée. Ces contremesures sont cependant vulnérables aux attaques sur l'étape de comparaison elle-même.

Pour s'affranchir de cette comparaison, d'autres contremesures dites par infection ou infectives ou infectieuses (ou « *infective countermeasures* » en langue anglo-saxonne) ont été proposées. Elles diffusent l'effet de la faute pour rendre le message chiffré ou déchiffré inexploitable par l'utilisateur malveillant.

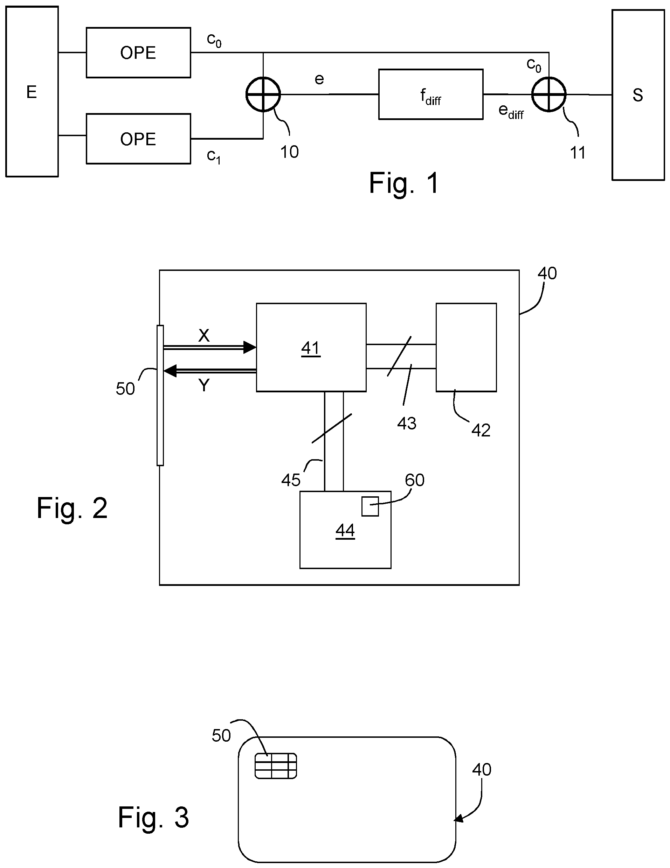

La **Figure 1** illustre de façon schématique le principe des contremesures connues par infection. L'opération cryptographique OPE sur le message d'entrée E est dupliquée permettant d'obtenir deux messages identiques, dits « messages premiers », $c_0$, $c_1$, en l'absence d'attaque par faute. Les messages peuvent être des chiffrés ou des messages en clair selon l'opération mise en œuvre. Pour faciliter la compréhension, on fait principalement référence ci-dessous à des « chiffrés ».

Un XOR (OU Exclusif) 10 sur les chiffrés $c_0$, $c_1$ issus des deux exécutions de l'opération cryptographique calcule l'erreur 'e' injectée (nulle en l'absence de faute), laquelle est diffusée, c'est-à-dire modifiée et amplifiée, par une fonction de diffusion $f_{diff}$ qui mappe 0 (absence d'erreur) en 0 et toute autre valeur binaire d'entrée (erreur injectée non nulle) en une valeur de sortie différente (c'est la diffusion de l'erreur).

Une fonction de diffusion est déterministe, sortant toujours la même sortie pour une même entrée, pour des paramètres fixes de la fonction. Elle présente en outre une forte entropie, c'est-à-dire modifiant de façon importante la sortie pour une petite modification de l'entrée.

L'erreur diffusée $e_{diff}$ (nulle ou pas) est alors ajoutée (XOR 11) à l'un des chiffrés (co) pour fournir un chiffré infecté en sortie S.

Aussi, les contremesures par infection infectent le chiffré résultat de telle façon que si le calcul cryptographique s'est déroulé correctement (sans erreur injectée) alors le chiffré résultat sera correct, sinon le chiffré résultat sera *a priori* inutilisable par l'attaquant.

Ce schéma de contremesure par infection n'est pas satisfaisant à tout le moins pour les raisons suivantes.

D'une part, il n'est pas résistant aux attaques par injections multiples de fautes. Il serait donc utile de disposer de contremesures par infection qui soient résistantes à des attaques par injection de fautes multiples. Il serait également préférable de disposer de telles contremesures qui soient facilement adaptables au niveau de protection souhaité.

D'autre part, la contrainte sur la fonction de diffusion (0 mappé en 0) réduit fortement les fonctions de diffusion utilisables, celles-ci ayant, pour la plupart, déjà été cassés dans la littérature.

Il est donc un besoin général d'améliorer les contremesures par infection connues.

**Exposé de l'invention**

Dans ce dessein, l'invention prévoit notamment un procédé de traitement cryptographique d'un message d'entrée en un message de sortie, comprenant les étapes suivantes mises en œuvre par un processeur :

- exécuter plusieurs fois une même opération cryptographique sur le message d'entrée pour obtenir une ou plusieurs paires de messages intermédiaires,
- pour chaque paire, appliquer une même fonction de diffusion aux deux messages intermédiaires de la paire pour obtenir deux messages infectants, et
- combiner les messages infectants avec un message recomposé obtenu par sélection de bits d'un ou plusieurs messages premiers résultant des exécutions de l'opération cryptographique, pour obtenir le message de sortie.

Selon la nature de l'opération cryptographique, les messages premiers résultant de son exécution, ainsi que les messages intermédiaires, les messages infectants et le message recomposé peuvent tous être des chiffrés ou tous correspondre à des messages en clair.

Corrélativement, l'invention concerne aussi un dispositif de traitement cryptographique comprenant un processeur configuré pour :

- exécuter plusieurs fois une même opération cryptographique sur un message d'entrée pour obtenir une ou plusieurs paires de messages intermédiaires,
- pour chaque paire, appliquer une même fonction de diffusion aux deux messages intermédiaires de la paire pour obtenir deux messages infectants, et
- combiner les messages infectants avec un message recomposé obtenu par sélection de bits d'un ou plusieurs messages premiers résultant des exécutions de l'opération cryptographique, pour obtenir un message de sortie.

Il est ainsi possible d'exécuter deux ou trois fois l'opération cryptographique et combiner deux messages (e.g. chiffrés) infectants (c'est-à-dire d'une même paire) avec le message recomposé, ou quatre ou cinq fois l'opération cryptographique et combiner quatre messages infectants (c'est-à-dire de deux paires associées à deux fonctions de diffusion) avec le message recomposé, ou plus généralement 2d ou 2d+1 fois l'opération cryptographique (d entier supérieur ou égal à 1) et combiner 2d messages infectants (d paires associées à d fonctions de diffusion) avec le message recomposé.

L'application de la même fonction de diffusion sur une paire de messages intermédiaires et leur combinaison ultérieure, par exemple via un XOR, permettent d'annuler les effets de la fonction de diffusion en cas d'absence de faute. Aussi, la contrainte visant à mapper un message (e.g. chiffré) 0 en un message « infectant » 0 est levée. Il en résulte un plus grand nombre de fonctions de diffusion disponibles.

Il est constaté que chaque paire de messages intermédiaires permet une protection contre une attaque par faute. L'invention peut donc être mise à l'échelle du nombre d'attaques par faute auxquelles elle doit être résistante, par simple multiplication du nombre de paires de messages intermédiaires traités (avec une fonction de diffusion associée).

Des caractéristiques facultatives des modes de réalisation de l'invention sont définies dans les revendications annexées. Certaines de ces caractéristiques sont expliquées ci-dessous en référence à un procédé, tandis qu'elles peuvent être transposées en caractéristiques de dispositif.

Dans un mode de réalisation, la fonction de diffusion est différente d'une paire de messages intermédiaires à l'autre. On utilise donc k fonctions de diffusion différentes pour k paires de messages infectants.

Dans un mode de réalisation, la fonction de diffusion d'une paire est basée sur un premier paramètre spécifique à ladite paire, par exemple un identifiant unique de ladite paire. Cet identifiant peut notamment être concaténé au message intermédiaire en entrée de la fonction de diffusion. Il est ainsi possible d'utiliser un même algorithme de diffusion pour toutes les paires où seul cet identifiant varierait entre les paires. Cette disposition simplifie la complexité calculatoire.

Dans un autre mode de réalisation, la ou les fonctions de diffusion des paires sont basées sur un second paramètre qui varie pour l'obtention d'un nouveau message de sortie à partir d'un nouveau message d'entrée. Ainsi, la fonction de diffusion d'une paire évolue d'une exécution de la contremesure à l'autre, améliorant la robustesse de la contremesure contre des attaques par injection de fautes sur plusieurs exécutions.

Dans un mode de réalisation, la fonction de diffusion est un générateur de nombre pseudo-aléatoire basé sur une ou plusieurs clés, par exemple lesdits premier et/ou second paramètres (ou PRNG pour PseudoRandom Number Generator en langue anglo-saxonne). Bien entendu, d'autres types de fonction de diffusion peuvent être utilisés, par exemple des fonctions de hachage.

Dans des premiers modes de réalisation, chaque message intermédiaire est un message premier résultant directement d'une des exécutions de l'opération cryptographique. Cette disposition offre une mise en œuvre simple de contremesure contre une ou plusieurs injections de faute.

Dans des seconds modes de réalisation, chaque message intermédiaire est un message concaténant, selon un profil de concaténation correspondant, plusieurs ou tous les messages premiers résultant directement des exécutions de l'opération cryptographique. Cette disposition permet de réduire le nombre d'exécutions de l'opération cryptographique contre un nombre fixé d'injections de faute, comparée aux premiers modes ci-dessus.

Dans un mode de réalisation particulier, des messages intermédiaires de deux paires différentes diffèrent entre eux par une rotation différente des messages premiers au sein d'un même message maître concaténant tous les messages premiers.

Dans une variante de réalisation, les messages intermédiaires sont formés de paires distinctes de messages premiers. Par exemple, le premier message intermédiaire est formé des deux messages premiers résultant des deux premières exécutions de l'opération cryptographique ; le deuxième message intermédiaire des deux messages premiers résultant des deuxième et troisième exécutions de l'opération cryptographique ; et ainsi de suite, le dernier message intermédiaire étant formé des deux messages premiers résultant des dernière et première exécutions de l'opération cryptographique. Ce mode de réalisation permet de s'affranchir d'une fonction de diffusion différente pour chaque paire.

D'une façon générale, on peut s'affranchir d'une fonction de diffusion différente pour chaque paire si au plus $\left\lfloor \frac{n}{2} \right\rfloor$ paires disjointes de profils de concaténation sont symétriques pour un groupe de n messages premiers, $\lfloor x \rfloor$ étant la partie entière inférieure de x. Une paire de profils de concaténation est dite symétrique pour le groupe de n messages premiers lorsque ses deux profils de concaténation utilisent les mêmes positions de messages dans la concaténation pour positionner les messages premiers issus du groupe de n messages premiers. Cette contrainte peut être vérifiée pour tout n entre 2 et d, avec d+1 le nombre total d'exécutions de l'opération cryptographique.

Cette configuration permet en effet d'éviter que $\left\lfloor \frac{n}{2} \right\rfloor + 1$ paires aient des messages intermédiaires identiques et qu'ainsi elles s'annulent lors de la combinaison finale. On garantit ainsi la robustesse contre n fautes injectées.

Dans un mode de réalisation particulier, le message recomposé n'est pas uniquement formé par un ou plusieurs desdits n messages premiers du groupe lorsque $\left\lfloor \frac{n}{2} \right\rfloor$ paires disjointes de profils de concaténation sont symétriques. En d'autres termes, il faut la présence, dans le message recomposé, d'au moins un message premier qui ne soit pas impliqué dans la symétrie des $\left\lfloor \frac{n}{2} \right\rfloor$ paires de profils de concaténation. Cela améliore la robustesse de la contremesure contre n attaques par injection de faute. De préférence, cette disposition est satisfaite pour n pair. De façon préférentielle, elle est en outre satisfaite pour d pair.

Dans un mode de réalisation, l'étape de combinaison comprend l'application de l'opérateur logique OU EXCLUSIF (ou XOR) entre les différents messages infectants et le message recomposé.

Préférentiellement, l'étape de combinaison comprend une première sous-étape initiale combinant (e.g. XOR) le message recomposé avec l'un des messages infectants et une ou plusieurs sous-étapes ultérieures combinant le résultat de la sous-étape initiale avec le ou les autres messages infectants. Il est possible que chaque sous-étape ultérieure combine le résultat de la sous-étape précédente avec un autre des messages/chiffrés infectants. Aussi, tous les messages infectants sont progressivement combinés. En variante, les autres messages infectants peuvent être combinés entre eux avant combinaison avec le résultat de la sous-étape initiale.

En commençant par combiner le message recomposé, on améliore la résistance de la contremesure à certaines attaques injectant plus de fautes que le nombre de paires de messages intermédiaires.

Dans un mode de réalisation, le message recomposé est l'un des messages premiers résultant directement d'une des exécutions de l'opération cryptographique. Cela simplifie les calculs.

Dans une variante, le message recomposé est formé de bits issus de plusieurs ou de tous les messages premiers résultant directement des exécutions de l'opération cryptographique, par exemple par répartition équitable et alternée des bits entre les messages intermédiaires ou les paires de tels messages.

Dans un mode de réalisation où chaque message intermédiaire est un message premier résultant directement d'une des exécutions de l'opération cryptographique, le message recomposé peut être formé de bits issus de messages premiers d'au moins deux paires différentes (i.e. traités par des fonctions de diffusion différentes).

Par exemple, le message recomposé est formé de bits issus de messages premiers de chacune des paires.

De façon préférée, au moins un ou plusieurs ou chaque octet du message recomposé est formé de bits issus de messages premiers d'au moins deux paires différentes. Cela s'applique notamment pour le cas où au plus huit paires sont générées.

On évite ainsi qu'un attaquant puisse récupérer, via des fautes identiques lors des deux exécutions d'une même paire, un chiffré infecté par une faute sans que celle-ci n'ait été diffusée ou modifiée. On améliore donc la sécurité du système.

Il faut comprendre de ce qui précède que chaque bit du message recomposé est issu d'un des messages premiers et occupe la même position dans le message recomposé que sa position dans le message premier dont il est issu. En effet, c'est le message recomposé qui est fourni comme message de sortie en l'absence de faute.

Un autre aspect de l'invention concerne un support non transitoire lisible par ordinateur stockant un programme qui, lorsqu'il est exécuté par un processeur d'un dispositif de traitement cryptographique, amène le dispositif de traitement cryptographique à effectuer le procédé tel que défini ci-dessus.

Au moins une partie des procédés selon l'invention peut être mise en œuvre par ordinateur. En conséquence, la présente invention peut prendre la forme d'un mode de réalisation entièrement matériel, d'un mode de réalisation entièrement logiciel (comportant les microprogrammes, les logiciels résidents, les microcodes, etc.) ou d'un mode de réalisation combinant des aspects logiciels et matériels qui peuvent tous être globalement appelés ici "circuit", "module" ou "système". De plus, la présente invention peut prendre la forme d'un produit de programme informatique incorporé dans tout support d'expression tangible disposant d'un code de programme utilisable par ordinateur incorporé dans le support.

Étant donné que la présente invention peut être mise en œuvre dans un logiciel, la présente invention peut être incorporée sous forme de code lisible par ordinateur pour être fournie à un appareil programmable sur tout support adapté. Un support tangible ou non transitoire peut comprendre un support de stockage tel qu'un lecteur de disque dur, un dispositif de bande magnétique ou un dispositif de mémoire à semi-conducteurs et analogues. Un support transitoire peut comporter un signal tel qu'un signal électrique, un signal électronique, un signal optique, un signal acoustique, un signal magnétique ou un signal électromagnétique, par exemple un signal hyperfréquence ou RF (radiofréquence).

Brève description des dessins

D'autres particularités et avantages de l'invention apparaîtront encore dans la description ci-après, illustrée par les figures ci-jointes qui en illustrent des exemples de réalisation dépourvus de tout caractère limitatif.

La **Figure 1** illustre de façon schématique le principe des contremesures connues par infection.
La **Figure 2** représente, schématiquement, un dispositif de traitement de données formant système cryptographique dans lequel la présente invention est mise en œuvre.
La **Figure 3** représente une carte à microcircuit qui constitue un exemple de dispositif de traitement cryptographique pour une mise en œuvre de l'invention tel que représenté à la **Figure 1**.
La **Figure 4** illustre de façon schématique le principe général de la contremesure par infection améliorée selon l'invention.
La **Figure 5** illustre de façon schématique des premiers modes de réalisation de la contremesure améliorée selon l'invention.
La **Figure 6** illustre une variante de la contremesure de la **Figure 5** résistante à l'injection d'une faute.

La **Figure 7** illustre une variante de contremesure améliorée par infection résistante à l'injection de deux fautes.
La **Figure 8** illustre une contremesure améliorée par infection résistante à l'injection de d fautes (d entier supérieur ou égal à 1).
La **Figure 9** illustre de façon schématique des seconds modes de réalisation de la contremesure améliorée selon l'invention.

**Description détaillée**

L'invention propose un nouveau type de contremesures par infection pour sécuriser des dispositifs de traitement cryptographique contre des attaques par injection de fautes.

Au lieu de déterminer l'erreur injectée avant de l'amplifier, la nouvelle contremesure applique une même fonction de diffusion à deux messages intermédiaires obtenus en exécutant une opération cryptographique sur un message d'entrée. L'erreur est donc amplifiée au sein même des messages intermédiaires, dénommés messages infectants après diffusion.

On peut ainsi s'affranchir de la contrainte des fonctions de diffusion visant à mapper une message intermédiaire 0 en un message « infectant » 0. Il en résultat un choix plus grand de fonctions de diffusion disponibles.

Un message recomposé à partir des bits des messages résultants des exécutions de l'opération cryptographique est également généré.

Les messages infectants et recomposé sont XOR-combinés pour fournir un message de sortie. Ce fonctionnement par paire de messages intermédiaires et fonction de diffusion associée permet, par simple duplication de cet ensemble avec une fonction de diffusion différente à chaque fois, de mettre à l'échelle la contremesure au niveau de protection souhaité, c'est-à-dire au nombre de fautes par injection auxquelles la contremesure doit résister.

Le traitement cryptographique peut recevoir en entrée un message en clair et ainsi générer un message chiffré ou « chiffré » en sortie. C'est le cas par exemple d'opérations cryptographiques de type chiffrement ou signature numérique. Dans ce cas, les messages intermédiaires, infectants et recomposé sont également des chiffrés.

En variante, le traitement cryptographique peut recevoir en entrée un message chiffré et ainsi générer un message déchiffré ou « en clair » en sortie. C'est le cas par exemple d'opérations cryptographiques de type déchiffrement. Dans ce cas, les messages intermédiaires, infectants et recomposé sont également des messages en clair.

Pour clarifier les propos ci-dessous, il est fait principalement références à des messages premiers, intermédiaires, infectants, recomposé et de sortie de type « chiffrés » (le message d'entrée étant alors « en clair »), mais l'invention s'applique également au cas des messages de type « en clair » résultant du déchiffrement d'un message chiffré en entrée. D'une manière générale, l'homme du métier est à même d'appliquer les enseignements qui suivent à tout type de message (en clair ou chiffré) en lieu et place des « chiffrés » spécifiquement indiqués.

La Figure 2 représente, schématiquement, un dispositif de traitement de données 40 formant système cryptographique dans lequel la présente invention est mise en œuvre. Ce dispositif 40 comprend un microprocesseur 41, auquel est associée d'une part une mémoire vive 42, par exemple au moyen d'un bus 43, et d'autre part une mémoire non volatile 44 (par exemple du type EEPROM), par exemple à travers un bus 45. Les bus 43 et 45 peuvent être un seul et même bus. Le microprocesseur 41 peut être un cryptoprocesseur sécurisé.

Le dispositif de traitement de données 40, et précisément le microprocesseur 41 qu'il incorpore, peuvent échanger des données avec des dispositifs extérieurs au moyen d'une interface de communication 50.

On a schématiquement représenté sur la **Figure 2** la transmission d'une donnée d'entrée X reçue d'un dispositif extérieur (non représenté) et transmise de l'interface de communication 50 au microprocesseur 41. De manière similaire, on a représenté la transmission d'une donnée de sortie Y du microprocesseur 41 vers l'interface de communication 50 à destination d'un dispositif extérieur. Cette donnée de sortie Y est issue d'un traitement de données par le microprocesseur 41, généralement sur la donnée d'entrée X à l'aide d'une donnée secrète 60 interne au système, par exemple une clé privée stockée en mémoire.

Les données d'entrée X et de sortie Y peuvent être les données d'entrée E et de sortie S d'un algorithme de traitement cryptographique selon l'invention, typiquement un message en clair (ou un chiffré en variante) en entrée et un message chiffré (ou en clair dans la variante) en sortie. En variante, d'autres traitements peuvent être prévus sur la donnée d'entrée X et/ou sur le chiffré S au sein du dispositif 40 de telle sorte que les données X, Y et E, S peuvent être, tout ou partie, différents.

Bien que, pour l'illustration, les données d'entrée et les données de sortie figurent sur deux flèches différentes, les moyens physiques qui permettent la communication entre le microprocesseur 41 et l'interface 50 pourront être réalisés par des moyens uniques, par exemple un port de communication série ou un bus.

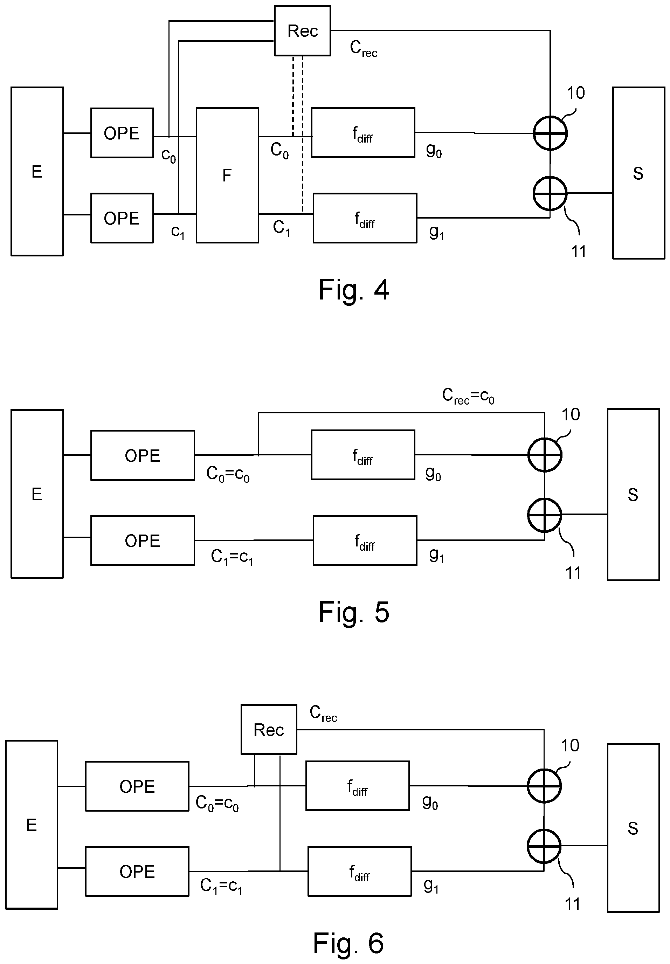

Le microprocesseur 41 est apte à exécuter un logiciel (ou programme d'ordinateur) qui permet au dispositif de traitement de données 40 d'exécuter un procédé conforme à l'invention dont des exemples sont donnés ci-dessous en regard des **Figures 4 à 9**. Le logiciel est composé d'une série d'instructions de commande du microprocesseur 41 qui sont par exemple stockées dans la mémoire 44.

En variante, l'ensemble microprocesseur 41 - mémoire non-volatile 44 - mémoire vive 42 peut être remplacé par un circuit à application spécifique qui comprend alors des moyens de mise en œuvre des différentes étapes du procédé selon l'invention.

Des dispositifs de traitement de données 40 incluent des éléments sécurisés, embarqués (embedded SE ou eSE) ou non, par exemple des cartes à puce, des cartes UICC (ou eUICC - pour embedded Universal Integrated Circuit Card) ou SIM (ou eSIM).

La **Figure 3** représente une carte à microcircuit qui constitue un exemple de dispositif de traitement cryptographique pour une mise en œuvre de l'invention tel que représenté à la **Figure 2**. Dans ce cas, l'interface de communication 50 est réalisée par exemple au moyen des contacts de la carte à microcircuit. La carte à microcircuit incorpore un microprocesseur 41, une mémoire vive 42 et une mémoire non volatile 44 comme cela est représenté sur la **Figure 1**.

Cette carte à microcircuit est par exemple conforme à la norme ISO 7816 et munie d'un microcontrôleur sécurisé qui regroupe le microprocesseur (ou CPU) 41 et la mémoire vive 42.

En variante, le dispositif de traitement cryptographique peut être inclus dans une clé USB, un document ou un support d'informations papier comportant dans l'une de ses feuilles un microcircuit associé à des moyens de communication sans contact. Il s'agit de manière préférée d'une entité électronique portable ou de poche. Bien entendu, l'invention s'applique aussi à un dispositif de traitement cryptographique équipant un ordinateur personnel ou un serveur.

Un tel dispositif de traitement cryptographique peut par exemple recevoir un message binaire E à traiter (chiffrement ou signature par exemple) et renvoyer un chiffré S.

Dans les exemples qui suivent, il est fait principalement référence à une opération cryptographique OPE de type AES (Advanced Encryption Standard) pour chiffrer le message E. Ce dernier est par exemple de taille L = 128 bits (soit 16 octets).

Bien entendu, l'invention s'applique à tout type d'opération cryptographique, qu'elle soit de chiffrement et/ou de signature. De même, l'invention s'applique à tout taille L (en bits) de message d'entrée E, préférentiellement un nombre entier (1 ou plus) d'octets.

La **Figure 4** illustre de façon schématique le principe général de la contremesure améliorée selon l'invention.

Contrairement à l'approche de l'état de l'art, il n'est plus cherché à obtenir l'erreur 'e' injectée afin de la modifier par la fonction de diffusion. Selon l'invention, l'erreur injectée est quand même diffusée mais à l'intérieur même des chiffrés intermédiaires $C_0$ et $C_1$ issus (par la fonction F) des chiffrés premiers $c_0$ et $c_1$, directement obtenus des exécutions de l'opération cryptographique sur le message d'entrée E.

La recombinaison finale de différents chiffrés, par exemple via les XORs 10, 11, permet de réinjecter l'erreur diffusée au sein d'un des chiffrés.

On retrouve l'exécution plusieurs fois de la même opération cryptographique OPE sur la donnée d'entrée E pour obtenir ici une paire de chiffrés intermédiaires Co, $C_1$, mais plus généralement, comme décrit par la suite une ou plusieurs paires de messages intermédiaires. De façon simple et selon les modes de réalisation, les chiffrés intermédiaires peuvent être simplement les chiffrés premiers résultant directement des exécutions de l'opération cryptographique, soit $C_0=c_0$ et $C_1=c_1$, ou peuvent combiner, mélanger ou concaténer (« || » étant l'opérateur concaténation) les chiffrés premiers résultant de ces exécutions, par exemple $C_0=c_0\|c_1$ et $C_1=c_1\|c_0$.

Un traitement de diffusion est alors réalisé par paire de chiffrés intermédiaires.

On applique une même fonction de diffusion aux deux chiffrés intermédiaires de la paire. Cela permet d'obtenir deux chiffrés infectants $g_0$, $g_1$. Surtout, il est possible d'utiliser tout type de fonction de diffusion, et notamment celles ne mappant pas le chiffré intermédiaire 0 en le chiffré infectant 0. Comme décrit par la suite les fonctions de diffusion sont différentes d'une paire de chiffrés intermédiaires à l'autre, pour le cas où plusieurs paires de chiffrés intermédiaires seraient générés.

Puis les chiffrés infectants go, $g_1$ sont combinés avec un chiffré recomposé $C_{rec}$ (fonction Rec) issu d'une sélection de bits d'un ou plusieurs chiffrés premiers résultant des exécutions de l'opération cryptographique (ici $c_0$ et $c_1$), éventuellement récupérés via les chiffrés intermédiaires les concaténant. On obtient ainsi le chiffré de sortie S.

Comme cela ressort de la Figure, la combinaison des chiffrés infectants et recomposé est typiquement réalisée à l'aide d'opérateurs logiques OU EXCLUSIF (ou XORs), ce qui simplifie les opérations. En variante, il est possible de combiner ces différents chiffrés à l'aide d'un opérateur '+' et de son inverse '-' : $C_{rec} + g_0 - g_1$.

Il ressort également de la Figure que cette combinaison combine initialement le chiffré recomposé avec l'un des chiffrés infectants (ici $g_0$ au travers du XOR 10) puis ultérieurement combine le résultat avec le ou les autres chiffrés infectants (ici $g_1$ au travers du XOR 11).

Si la contremesure de la Figure protège des attaques contre une faute par injection, cet ordre dans la combinaison des chiffrés protège en outre contre une deuxième faute attaquant l'un des XORs.

La fonction de diffusion $f_{diff}$ renvoie de préférence un chiffré infectant de longueur L (en nombre de bits) afin de pouvoir réaliser les opérations de combinaison (XOR) sur des chiffrés de même longueur. Si une fonction de diffusion renvoie un chiffré infectant de plus grande longueur que L, le XOR (combinaison) avec un chiffré est réalisé sur la longueur commune (les bits présents dans les deux chiffrés combinés).

Dans un mode de réalisation, la fonction de diffusion $f_{diff}$ est un générateur de nombre pseudo-aléatoire basé sur une ou plusieurs clés ou « paramètres » (ou PRNG pour PseudoRandom Number Generator en langue anglo-saxonne), par exemple trois rondes d'AES (le PRNG est ainsi basé sur l'AES). Bien entendu, d'autres types de fonction de diffusion peuvent être utilisés, incluant typiquement les fonctions de hachage.

Des générateurs pseudo-aléatoires sont adaptés aux traitements cryptographiques en ce qu'ils sont capables de produire un chiffré infectant suffisamment peu discernable d'un aléa parfait. De tels générateurs PRNG incluent les générateurs Yarrow, Fortuna, Blum Blum Shub, ISAAC ou encore de multiple rondes d'AES.

Une première clé ou paramètre, dite « de paire », est spécifique à ladite paire, par exemple un identifiant unique de ladite paire. Cela permet d'obtenir des fonctions de diffusion différentes pour les paires en utilisant le même algorithme de diffusion. Cette clé de paire est optionnelle pour le cas d'une mise en œuvre présentant une seule paire de chiffrés intermédiaires.

Une seconde clé ou paramètre, dite « d'exécution », est modifiée d'une exécution de la contremesure à l'autre, c'est-à-dire qu'elle varie pour l'obtention de chaque nouveau message de sortie à partir d'un nouveau message d'entrée, c'est-à-dire à chaque nouvelle exécution de la contremesure. Cela confère une robustesse de l'invention sur plusieurs exécutions de la contremesure, en utilisant le même algorithme de diffusion. A titre d'exemple, il peut s'agir d'un aléa généré par le système cryptographique. De préférence, la même clé d'exécution est utilisée par toutes les fonctions de diffusion lors de la même exécution de la contremesure. Cela permet de limiter la génération d'aléas à un seul aléa par exécution de la contremesure.

Bien entendu, les deux clés peuvent être manipulées ensemble sous forme d'une seule clé (issue par exemple de la concaténation des deux clés).

Comme évoqué ci-dessus, l'invention propose des modes de réalisation où chaque chiffré (plus généralement message) intermédiaire est un chiffré premier résultant directement d'une des exécutions de l'opération cryptographique. La fonction F de la **Figure 4** est dans ce cas l'identité : $C_i=c_i$. Ces modes de réalisation sont illustrés par les **Figures 5 à 8**.

La contremesure illustrée par la **Figure 5** est résistante à une injection de faute, éventuellement sur plusieurs exécutions de la contremesure dans la mesure où la clé d'exécution est changée à chaque nouvelle exécution de la contremesure.

L'opération cryptographique OPE, par exemple l'AES, est exécuté deux fois sur la donnée d'entrée E de longueur L, conduisant à l'obtention des deux chiffrés premiers $c_0$, $c_1$ formant une seule paire ($Co=co$, $C_1=c_1$) de chiffrés intermédiaires de longueur L. Du fait de la fonction F identité, les termes « chiffré premier » et « chiffré intermédiaire » sont synonymes.

Une même fonction de diffusion $f_{diff}$, par exemple un PRNG tel que trois rondes d'AES, est appliquée aux deux chiffrés intermédiaires $Co=co$, $C_1=c_1$ conduisant à l'obtention de deux chiffrés infectants go, $g_1$ de préférence de longueur L. La fonction de diffusion $f_{diff}$ amplifie l'éventuelle erreur qu'un des chiffrés intermédiaires contiendrait.

Le chiffré recomposé est formé d'un des deux chiffrés premiers, ici $Rec(c_0, c_1) = c_0$. Aussi la fonction de recomposition Rec est dans ce cas-là la fonction identité d'une de ses entrées. On réduit ainsi le temps d'occupation du processeur pour la contremesure par infection contre une seule faute injectée.

Les chiffrés infectants $g_0$, $g_1$ et le chiffré recomposé $C_{rec}=c_0$ sont ensuite combinés pour obtenir le chiffré de sortie S de longueur L. Comme illustré, cette combinaison peut être réalisée à l'aide des XOR 10, 11 : $S = g_0 \oplus c_0 \oplus g_1$. De préférence, les étapes suivantes sont réalisées :

$$S \leftarrow g_0 \oplus c_0$$
$$S \leftarrow S \oplus g_1$$

Dans cette configuration, on combine en premier le chiffré recomposé $c_0$ avec l'un des chiffrés infectants $g_0$ et $g_1$ plutôt que de combiner les chiffrés infectants entre eux avant d'introduire $c_0$. Cela permet en outre une protection contre l'injection d'une erreur additionnelle attaquant l'un des XORs.

La **Figure 6** illustre une variante de contremesure améliorée par infection résistante à l'injection d'une faute. A nouveau, cette contremesure est résistance à des attaques (injection d'une seule faute) sur plusieurs exécutions de celle-ci dans la mesure où la clé d'exécution est prévue et changée à chaque nouvelle exécution de la contremesure.

Comme pour la Figure précédente, l'opération cryptographique OPE, par exemple l'AES, est exécuté deux fois sur la donnée d'entrée E de longueur L, conduisant à l'obtention de la paire de chiffrés intermédiaires $(C_0=c_0, C_1=c_1)$ de longueur L. Du fait de la fonction F identité, les termes « chiffré premier » et « chiffré intermédiaire » sont synonymes.

La même fonction de diffusion $f_{diff}$ leur est appliquée conduisant à l'obtention de deux chiffrés infectants $g_0$, $g_1$.

Les deux chiffrés $C_0=c_0$, $C_1=c_1$ sont également traités à l'aide de la fonction de recomposition Rec pour former le chiffré recomposé $C_{rec}$ de longueur L en sélectionnant des bits des chiffrés premiers $c_0$, $c_1$. Si l'on combine ici les chiffrés premiers directement obtenus des exécutions de l'opération OPE, le résultat est identique avec les chiffrés intermédiaires Co, $C_1$ puisque la fonction F est l'identité.

Chaque bit du chiffré recomposé $C_{rec}$ est issu d'un des chiffrés premiers $c_0$, $c_1$ et occupe la même position dans le chiffré recomposé que sa position dans le chiffré premier dont il est issu. En d'autres termes, $C_{rec}(i)$ = co(i) ou $c_1(i)$, avec x(i) représentant le bit $b_i$ d'indice i dans le chiffré x. Généralement le chiffré x de longueur L est formé des bits $\{ b_{L-1}, b_{L-2}, ..., b_2, b_1, b_0 \}$.

Dans cette variante de la **Figure 6**, le chiffré recomposé $C_{rec}$ est formé de bits issus des deux chiffrés premiers de la paire, c'est-à-dire qu'il existe au moins un i et un j tels que $C_{rec}(i)$ provient de $c_0$ et $C_{rec}(j)$ provient

de $c_1$.

La fonction de recomposition prend préférablement (mais non obligatoirement) équitablement le même nombre de bits de chaque $c_i$.

Plusieurs schémas de sélection peuvent être envisagés. Par exemple, la moitié des bits de $C_{rec}$ provient de chaque chiffré premier $c_0$, $c_1$. Mais une autre répartition des bits peut être envisagée, par exemple prévoir au moins un bit de chaque chiffré $c_0$, $c_1$ à l'intérieur d'un ou plusieurs ou tous les octets formant le chiffré recomposé $C_{rec}$.

A titre d'exemple, un bit sur deux peut être issu de l'un ou l'autre des chiffrés $c_0$, $c_1$. Par exemple, $C_{rec}(2i)$ = $c_0(2i)$ et $C_{rec}(2i+1)$ = $c_1(2i+1)$ quel que soit L/2 > i ≥ 0 (L longueur des chiffrés), autrement écrit en notation booléenne :
$(c_0 \wedge 0xAAA ... AA) \oplus (c_1 \wedge 0x555 ... 55)$ avec $\wedge$ l'opérateur ET (AND) et $\oplus$ l'opérateur OU EXCLUSIF (XOR). D'autres répartitions des bits peuvent être envisagées, même dans le cadre d'un partage par moitié. Par exemple, $(c_0 \wedge 0x0F0F ... 0F) \oplus (c_1 \wedge 0xF0F0 ... F0)$ et plus généralement $(c_0 \wedge a_0) \oplus (c_1 \wedge a_1)$ où $a_0 \oplus a_1 = 0xFFFF ... FF$.

En l'absence de faute injectée, on retrouve $C_{rec}=c_0=c_1$. En présence de faute injectée, $C_{rec}$ est susceptible d'être différent de $c_0$ et/ou $c_1$.

Les chiffrés infectants go, $g_1$ et le chiffré recomposé $C_{rec}$ sont ensuite combinés pour obtenir le chiffré de sortie S. Comme illustré, cette combinaison peut être réalisée à l'aide des XOR 10, 11 : $S = g_0 \oplus Rec(c_0, c_1) \oplus g_1$. De préférence, les étapes suivantes sont réalisées :

$$S \leftarrow Rec(c_0, c_1)$$
$$S \leftarrow g_0 \oplus S$$
$$S \leftarrow S \oplus g_1$$

Dans cette configuration, on combine en premier le chiffré recomposé $C_{rec}$ avec l'un des chiffrés infectants $g_0$ et $g_1$ plutôt que de combiner les chiffrés infectants entre eux avant d'introduire $C_{rec}$.

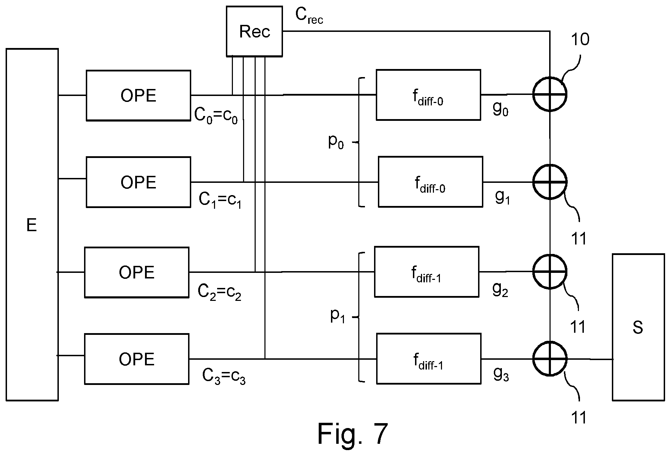

La **Figure 7** illustre une variante de contremesure améliorée par infection résistante à l'injection de deux fautes sur une exécution de la contremesure. Cette contremesure est résistance à des attaques par injection d'une faute sur plusieurs exécutions de celle-ci dans la mesure où la clé d'exécution est prévue et changée à chaque nouvelle exécution de la contremesure.

L'opération cryptographique OPE, par exemple l'AES, est exécuté quatre fois sur la donnée d'entrée E, conduisant à l'obtention de quatre chiffrés premiers $c_0$ à $c_3$, de quatre chiffrés intermédiaires $C_0=c_0$ à $C_3=c_3$ formant deux paires de chiffrés intermédiaires $(c_0, c_1)$ et $(c_2, c_3)$, soit de façon générique $(c_{2i}, c_{2i+1})$ pour la paire « $p_i$ ». Bien entendu, cette organisation des paires par indices consécutifs n'est qu'illustrative, à des fins de simplification des explications. Du fait de la fonction F identité, les termes « chiffré premier » et « chiffré intermédiaire » sont synonymes.

Pour chaque paire « $p_i$ », une même fonction de diffusion $f_{diff-i}$ est appliquée aux deux chiffrés ($c_{2i}$, $c_{2i+1}$) de la paire. On obtient ainsi quatre chiffrés infectants $g_0$ à $g_3$.

$f_{diff-0}$ est la fonction de diffusion pour la première paire po et $f_{diff-1}$ est celle de la seconde paire $p_1$. Comme indiqué supra, ces fonctions de diffusion peuvent par exemple être des PRNGs, notamment des PRNGs basés sur l'AES tels que trois rondes d'AES utilisant des clés différentes.

Dans des modes de réalisation, les fonctions de diffusion sont basées sur une clé de paire et sur une clé d'exécution. A titre d'exemple, la clé de paire et/ou la clé d'exécution peuvent être concaténées ou XORed avec le chiffré en entrée de la fonction de diffusion. Cela permet d'obtenir facilement des fonctions de diffusion différentes d'une paire à l'autre et d'une exécution de la contremesure à l'autre, tout en exécutant le même algorithme de diffusion sur l'entrée concaténée ou XORed.

L'utilisation de générateurs de nombre pseudo-aléatoire basés sur une clé différente d'une paire de chiffrés à l'autre n'est qu'un mode de réalisation de l'invention. D'une façon générale, la fonction de diffusion est différente d'une paire de chiffrés à l'autre. En outre, elle varie également d'une exécution de la contremesure à l'autre.

Les quatre chiffrés $c_0$ à $c_3$ sont également traités à l'aide d'une fonction de recomposition Rec qui a pour objet de former un chiffré recomposé $C_{rec}$ en sélectionnant des bits des chiffrés $c_0$ à $c_3$. Chaque bit du chiffré recomposé $C_{rec}$ est issu d'un des chiffrés $c_0$ à $c_3$ et occupe la même position dans le chiffré recomposé que sa position dans le chiffré dont il est issu. En d'autres termes, $C_{rec}(i) = c_0(i)$ ou $c_1(i)$ ou $c_2(i)$ ou $c_3(i)$.

Pour des raisons de sécurité, le chiffré recomposé $C_{rec}$ est préférentiellement formé de bits issus de chiffrés d'au moins deux paires différentes, et non uniquement de deux chiffrés différents.

Dans le cas de la Figure qui présente seulement deux paires de chiffrés, le chiffré recomposé $C_{rec}$ est formé de bits issus de chiffrés de chacune des paires.

La fonction de recomposition peut être choisie en fonction des attaques à contrer. A titre d'exemple, les attaques de type DFA (Differential Fault Analysis) sur une opération cryptographique AES-128 sont basées sur la modification de quatre octets du chiffré et l'exploitation de ces modifications.

D'une façon générale, les attaques exploitent généralement des modifications sur un, plusieurs voire tous les octets du chiffré.

Dans ce contexte, la fonction de recomposition peut être choisie de telle sorte qu'au moins un ou plusieurs ou chaque octet du chiffré recomposé $C_{rec}$ est formé de bits issus de chiffrés d'au moins deux paires différentes, voire de plus de deux paires ou de toutes les paires lorsque cela est possible (e.g. 8 paires maximum). Cela permet de sécuriser la contremesure contre certaines attaques injectant la même faute dans les exécutions de l'opération OPE correspondant à une même paire de chiffrés.

Comme indiqué plus haut, plusieurs schémas de sélection/recomposition peuvent être envisagés.

La fonction de recomposition prend préférablement (mais non obligatoirement) équitablement le même nombre de bits de chaque $c_i$ ou de chaque paire $p_i$. Par exemple, un quart des bits de $C_{rec}$ peut provenir de chaque chiffré $c_0$ à $c_3$. En variante, la moitié des bits de $C_{rec}$ peut provenir des chiffrés de chaque paire $p_i$. Mais une autre répartition des bits peut être envisagée, par exemple prévoir au moins un bit de chaque chiffré $c_0$ à $c_3$ à l'intérieur d'un ou plusieurs ou chaque octet formant le chiffré recomposé $C_{rec}$.

A titre d'exemple, un bit sur quatre peut être issu de chacun des chiffrés $c_0$ à $c_3$. Par exemple, ($c_0 \wedge 0x888 ... 88$)$\oplus$($c_1 \wedge 0x222 ... 22$)$\oplus$($c_2 \wedge 0x444 ... 44$)$\oplus$($c_3 \wedge 0x111 ...11$). Cet exemple illustre le cas d'une fonction de recomposition qui ne prend pas deux bits consécutifs issus de deux chiffrés de la même paire.

D'autres répartitions des bits peuvent être envisagées, même dans le cadre d'un partage par quart. Par exemple,
($c_0 \wedge 0xF000F000 ... F000$)$\oplus$($c_1 \wedge 0x0F000F00 ... 0F00$)$\oplus$($c_2 \wedge 0x00F000F0 ... 00F0$)$\oplus$($c_3 \wedge 0x000F000F ... 000F$) mais aussi
($c_0 \wedge 0xFF000000 ... FF000000$)$\oplus$($c_1 \wedge 0x00FF0000 ... 00FF0000$)$\oplus$($c_2 \wedge 0x0000FF00 ... 0000FF00$)$\oplus$($c_3 \wedge 0x000000FF ... 000000FF$), et plus généralement
($c_0 \wedge a_0$)$\oplus$($c_1 \wedge a_1$)$\oplus$($c_2 \wedge a_2$)$\oplus$($c_3 \wedge a_3$) avec
$$\bigoplus_{i=0}^{3} a_i = 0xFFFF ... FF$$ .

Dans un mode de réalisation améliorant la robustesse, $a_i \wedge a_{j\neq i} = 0$ (quels que soient i et j) assurant qu'un bit n'est récupéré que d'un seul chiffré.

Dans un autre mode de réalisation, éventuellement combinable, $a_0 \vee a_1 \neq 0$ et $a_2 \vee a_3 \neq 0$ (v étant l'opérateur booléen OU), assurant qu'un bit au moins soit prélevé dans chaque paire.

En l'absence de faute injectée, on retrouve $C_{rec}=c_0=c_1=c_2=c_3$. En présence de faute injectée, $C_{rec}$ est susceptible d'être différent des $c_0$ à $c_3$.

Les chiffrés infectants $g_0$ à $g_3$ et le chiffré recomposé $C_{rec}$ sont ensuite combinés pour obtenir le chiffré de sortie S. Comme illustré, cette combinaison peut être réalisée à l'aide des XOR 10, 11 : $S = g_0 \oplus Rec(c_0, c_1, c_2, c_3) \oplus g_1 \oplus g_2 \oplus g_3$.

Bien entendu, les chiffrés infectants peuvent être pris dans un ordre différent. En outre, s'il est préférable d'alterner les chiffrés infectants provenant de différentes paires, on peut tout aussi bien réaliser les premiers XORs avec les deux chiffrés d'une même paire, puis les derniers XORs avec les deux chiffrés de l'autre paire.

De préférence, les étapes suivantes sont réalisées :

$S \leftarrow Rec(c_0, c_1, c_2, c_3)$

$S \leftarrow g_0 \oplus S$

$S \leftarrow S \oplus g_1$

$S \leftarrow S \oplus g_2$

$S \leftarrow S \oplus g_3$

Dans cette configuration, on combine en premier le chiffré recomposé $C_{rec}$ avec l'un des chiffrés infectants $g_0$ à $g_3$ plutôt que de combiner deux ou plus chiffrés infectants entre eux avant d'introduire $C_{rec}$. Le chiffré recomposé $C_{rec}$ est combiné avec l'un des chiffrés infectants lors d'une sous-étape initiale, puis, lors de plusieurs sous-étapes ultérieures successives, chacun des autres chiffrés infectants est combiné avec le résultat de la sous-étape précédente.

Ce mode de réalisation de la **Figure 7** montre que la contremesure améliorée selon l'invention peut être mise à l'échelle du niveau de sécurité souhaité (en termes de nombre de fautes injectées contre lesquelles la contremesure est efficace). Cette mise à l'échelle est réalisée par la duplication des exécutions de l'opération OPE pour ajouter une nouvelle paire $p_i$ de chiffrés intermédiaires et l'utilisation d'une nouvelle fonction de diffusion $f_{diff-i}$ dédiée.

Aussi, il est possible d'obtenir une contremesure améliorée par infection qui soit résistante à un nombre quelconque de fautes injectées.

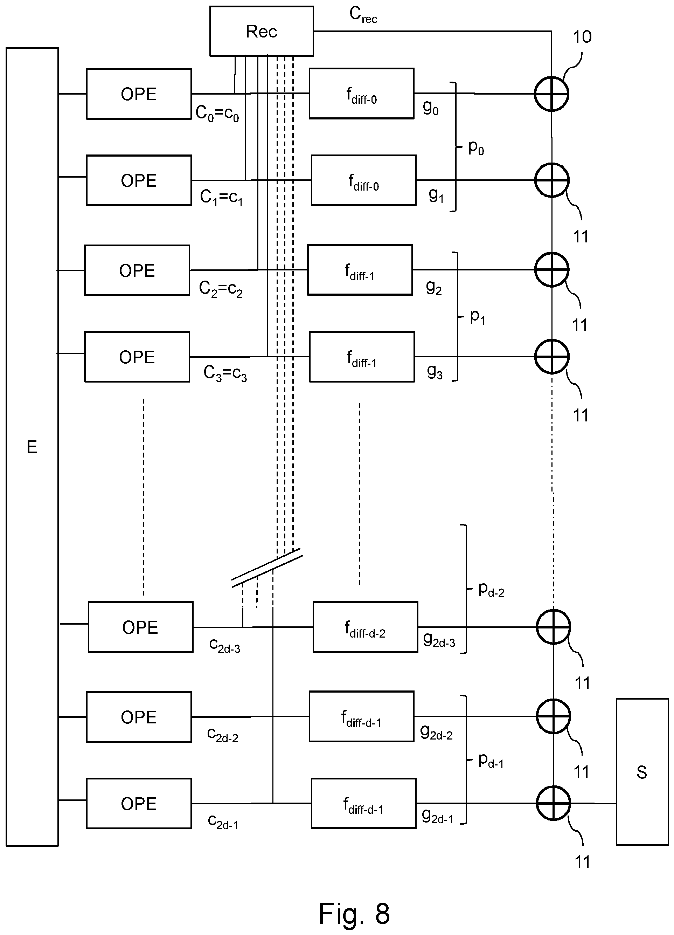

La **Figure 8** illustre à ce titre la contremesure améliorée par infection résistante à l'injection de d fautes (d entier supérieur ou égal à 1) sur une seule exécution de la contremesure. Elle est donc particulièrement bien adaptée à des mécanismes tels que la génération de clés de session.

En outre, cette contremesure est résistance à des attaques par injection d'une faute sur plusieurs exécutions de celle-ci dans la mesure où la clé d'exécution est prévue et changée à chaque nouvelle exécution de la contremesure.

La valeur maximale de d peut dépendre de l'algorithme OPE à protéger et/ou du type d'attaque que l'on cible. Par exemple, l'AES étant sensible à une attaque qui cible 32 bits du chiffré erroné, la valeur maximale pour d est 31. En d'autres termes, cette valeur maximale est le nombre minimal de bits du chiffré sur lesquels l'attaque peut se baser, moins 1.

L'opération cryptographique OPE, par exemple l'AES, est exécuté 2d fois sur la donnée d'entrée E, conduisant à l'obtention des 2d chiffrés intermédiaires $C_0$ à $C_{2d-1}$ égaux aux 2d chiffrés premiers $c_0$ à $c_{2d-1}$, directement issus des exécutions de l'opération OPE. Ils forment d paires de chiffrés $(c_0, c_1)$, $(c_2, c_3)$ ... $(c_{2d-2}, c_{2d-1})$, soit de façon générique $(c_{2i}, c_{2i+1})$ pour la paire $p_i$. Bien entendu, cette organisation des paires par indices consécutifs n'est qu'illustrative, à des fins de simplification des explications. A nouveau, du fait de la fonction F identité, les termes « chiffré premier » et « chiffré intermédiaire » sont synonymes.

Les multiples exécutions de l'opération OPE peuvent être en tout ou partie simultanées et/ou en séquence.

Pour chaque paire $p_i$ ($0 \leq i < d$), une même fonction de diffusion $f_{diff-i}$, par exemple un PRNG tel que trois rondes d'AES utilisant une clé de paire $K_i$ ($K_i \neq K_j$ pour tout i, j avec $i \neq j$) et éventuellement une clé d'exécution (un aléa), est appliquée aux deux chiffrés ($c_{2i}$, $c_{2i+1}$) de la paire. On obtient ainsi deux chiffrés infectants $g_{2i}$ à $g_{2i+1}$ par paire, soit un total de 2d chiffrés infectants $g_0$ à $g_{2d-1}$.

Les explications fournies plus haut sur les fonctions de diffusion s'appliquent également à ce mode de réalisation. Par exemple, l'utilisation de générateurs de nombre pseudo-aléatoire basés sur une clé $K_i$ différente d'une paire de chiffrés à l'autre n'est qu'un mode de réalisation de l'invention. D'une façon générale, la fonction de diffusion est différente d'une paire de chiffrés à l'autre. Une ou plusieurs fonctions de diffusion utilisées peuvent être des PRNG alors qu'une ou plusieurs autres peuvent être d'un ou plusieurs autres types, par exemple des fonctions de hachage. Egalement, la clé de paire et/ou la clé d'exécution peuvent être concaténées ou XORed avec le chiffré intermédiaire en entrée de la fonction de diffusion.

Les 2d chiffrés $c_0$ à $C_{2d-1}$ sont également traités à l'aide d'une fonction de recomposition Rec qui a pour objet de former un chiffré recomposé $C_{rec}$ en sélectionnant des bits des chiffrés $c_0$ à $c_{2d-1}$. Chaque bit du chiffré recomposé $C_{rec}$ est issu d'un des chiffrés $c_0$ à $C_{2d-1}$ et occupe la même position dans le chiffré recomposé que sa position dans le chiffré dont il est issu. En d'autres termes, $C_{rec}(i) = c_j(i)$ où $j = 0$ à 2d-1.

Pour des raisons de sécurité, le chiffré recomposé $C_{rec}$ est préférentiellement formé de bits issus de chiffrés d'au moins deux paires différentes, et non uniquement de deux chiffrés différents.

Dans un mode de réalisation particulier, le chiffré recomposé $C_{rec}$ est formé de bits issus de chiffrés de chacune des paires. Cela permet de mélanger statistiquement, dans le chiffré recomposé, une partie des erreurs injectées dans les différentes exécutions de l'opération OPE.

La fonction de recomposition peut être choisie en fonction des attaques à contrer. A titre d'exemple, les attaques de type DFA (Differential Fault Analysis) sur une opération cryptographique AES-128 sont basées sur la modification de quatre octets du chiffré (du fait de la dimension de l'opération MixColumns dans l'AES) et l'exploitation de ces modifications.

D'une façon générale, les attaques exploitent généralement des modifications sur un, plusieurs voire tous les octets du chiffré.

Dans ce contexte, la fonction de recomposition peut être choisie de telle sorte qu'au moins un ou plusieurs ou chaque octet du chiffré recomposé $C_{rec}$ est formé de bits issus de chiffrés d'au moins deux paires différentes, voire de plus de deux paires ou de toutes les paires lorsque cela est possible (e.g. 8 paires maximum par octet). Cela permet en effet de sécuriser la contremesure contre certaines attaques injectant la même faute dans les exécutions de l'opération OPE correspondant à une paire de chiffrés.

Comme indiqué plus haut, plusieurs schémas de sélection/recomposition peuvent être envisagés.

La fonction de recomposition prend préférablement (mais non obligatoirement) équitablement le même nombre de bits de chaque $c_i$ ou de chaque paire $p_i$. Par exemple, 1/2d des bits de $C_{rec}$ peut provenir de chaque chiffré $c_0$ à $c_{2d-1}$. En variante, 1/d des bits de $C_{rec}$ peut provenir des chiffrés de chaque paire $p_i$. Mais une autre répartition des bits peut être envisagée, par exemple prévoir au moins un bit de chaque chiffré $c_0$ à $c_{2d-1}$, à l'intérieur d'un ou plusieurs ou chaque octet formant le chiffré recomposé $C_{rec}$.

A titre d'exemple, un bit chaque 2d bits peut être issu de chacun des chiffrés $c_0$ à $c_{2d-1}$. Si d n'est pas une puissance de 2, un bit de plus peut être sélectionné pour certains chiffrés par rapport à d'autres.

Typiquement si d est une puissance de 2, la fonction de recomposition suivante peut être utilisée :

$$\bigoplus_{i=0}^{2d-1} c_i \wedge \left( \sum_{j=0}^{(\frac{128}{2d}-1)} 2^{\frac{128}{2d}*j} \ll (i) \right)$$

où $x \ll y$ décale (rotation) les bits de x de y positions (bits) vers la gauche.

L'homme du métier est à même d'identifier des fonctions de recomposition assurant la sélection de bits provenant de chiffrés d'au moins deux paires distinctes, éventuellement au sein d'un même octet, de chacun de plusieurs octets, voire de chacun des octets du chiffré recomposé.

Par exemple,

$$Rec(c_0, c_1, ..., c_{2d-1}) = \bigoplus_{i=0}^{2d-1} c_i \wedge a_i \quad \text{avec}$$

$$\bigoplus_{i=0}^{2d-1} a_i = 0xFFFF ... FF .$$

Dans une réalisation améliorant la robustesse, $a_i \wedge a_{j \neq i} = 0$ (pour tous i et j).

En outre, pour s'assurer qu'au moins un bit est sélectionné dans n (e.g. n=2) paires distinctes de chiffrés, $a_i \vee a_{d+i} \neq 0$ pour au moins n valeurs de i différentes. Cette condition est appliquée à l'ensemble des bits des $a_i$, mais en variante elle peut être appliquée à un octet particulier, à plusieurs octets, à chacun de plusieurs octets ou à chacun des octets des $a_i$ selon les contraintes souhaitées.

En l'absence de faute injectée, on retrouve $C_{ree} = c_{i, i=0...2d-1}$. En présence de faute injectée, $C_{rec}$ est susceptible d'être différent des $c_0$ à $c_{2d-1}$.

Les chiffrés infectants $g_0$ à $g_{2d-1}$ et le chiffré recomposé $C_{rec}$ sont ensuite combinés pour obtenir le chiffré de sortie S. Comme illustré, cette combinaison peut être réalisée à l'aide des XOR 10, 11 : S = $g_0 \oplus Rec(c_0, c_1, ... , c_{2d-1}) \oplus g_1 \oplus g_2 \oplus ... \oplus g_{2d-1}$.

Bien entendu, les chiffrés infectants peuvent être pris dans un ordre différent. En outre, s'il est préférable d'alterner les chiffrés infectants provenant de différentes paires, on peut tout aussi bien réaliser deux XORs consécutifs avec les deux chiffrés d'une même paire.

De préférence, les étapes suivantes sont réalisées en combinant en premier le chiffré recomposé $C_{rec}$ avec l'un des chiffrés infectants $g_0$ à $g_{2d-1}$ plutôt que de combiner deux ou plus chiffrés infectants entre eux avant d'introduire $C_{rec}$, puis en combinant le résultat de chaque combinaison successive avec chacun des autres chiffrés infectants.

Si les contremesures par infection illustrées par les **Figures 5 à 8** sont résistantes à l'injection de d fautes sur une exécution, elles ne garantissent pas le même degré de sécurité sur plusieurs exécutions (uniquement la protection contre une faute).

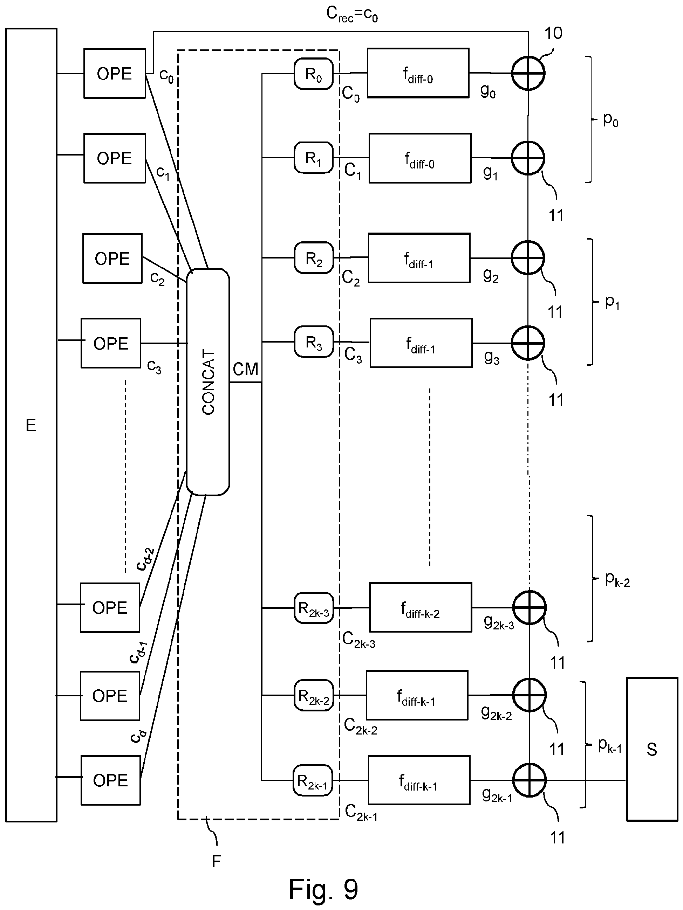

Les modes de réalisation présentés ci-après, en lien avec la **Figure 9**, fournissent une sécurisé accrue, notamment contre l'injection de d fautes sur une exécution et contre l'injection répétée de d fautes sur plusieurs exécutions de la contremesure. La valeur maximale de d (d entier supérieur ou égal à 1) est comme évoquée supra en référence à la **Figure 8**.

En outre ces modes de réalisation présentent l'avantage d'une complexité moindre puisque, comme expliqué ci-dessous, le nombre d'exécutions de l'opération OPE et de fonctions de diffusion est substantiellement réduit (à d ou d+1 contre 2d).

Dans ces modes de réalisation, chaque chiffré intermédiaire $C_i$ est un chiffré combinant ou concaténant plusieurs ou tous les chiffrés premiers $c_i$ résultant directement des exécutions de l'opération cryptographique. En d'autres termes, la fonction F (**Figure 4**) n'est pas la fonction identité mais elle combine tout ou partie des chiffrés premiers $c_i$.

L'opération cryptographique OPE, par exemple l'AES, est exécuté d+1 fois sur la donnée d'entrée E de longueur L, conduisant à l'obtention de d+1 chiffrés premiers $c_0$ à $c_d$ directement issus des exécutions de l'opération OPE. La fonction F de mélange des chiffrés premiers permet de générer k paires de chiffrés intermédiaires (Co, Ci), (c_2, C_3) ..., soit de façon générique (C_{2i}, C_{2i+1}) pour la paire $p_i$. Bien entendu, cette organisation des paires par indices consécutifs n'est qu'illustrative, à des fins de simplification des explications.

Les multiples exécutions de l'opération OPE peuvent être en tout ou partie simultanées et/ou en séquence.

k dépend de d : si d est pair, k=d/2 ; si d est impair, k=(d+1)/2. Aussi, si d est pair, la fonction F génère d chiffrés intermédiaires organisés en paires ; si d est impair, la fonction F génère d+1 chiffrés intermédiaires organisés en paires. Si d=2, on retrouve une paire de chiffrés intermédiaires, de façon similaire à la **Figure 5** ou **6** pour la mode de réalisation ci-dessus. Si d=3 ou 4, on retrouve deux paires de chiffrés intermédiaires, de façon similaire à la **Figure 7** pour la mode de réalisation ci-dessus.

La fonction F produit des chiffrés intermédiaires $C_i$ à partir d'une concaténation de tout ou partie des chiffrés premiers $c_0$ à $c_d$, qui est différente d'un chiffré intermédiaire à l'autre.

La fonction F peut être choisie de telle sorte que l'injection de la même faute sur n (2 ou plus) exécutions de l'opération OPE (donc dans deux ou plus $c_i$) n'aboutissent pas à l'obtention de trop de paires de chiffrés intermédiaires identiques, ce qui conduirait à leur annulation via les XORs 10, 11 finaux. Cette protection est possible en choisissant des concaténations appropriées et offre l'avantage de permettre l'utilisation de la même fonction de diffusion $f_{diff}$ pour plusieurs voire toutes les paires de chiffrés intermédiaires.

Par exemple pour d=3 (donc k=2 paires), quatre exécutions de l'opération OPE ont lieu aboutissant à l'obtention de $c_0$ à $c_3$. Les quatre (2k) chiffrés intermédiaires, de longueur (d+1)L, peuvent être formés comme suit :

$$C_0 = c_0\|c_1\|c_2\|c_3,$$
$$C_1 = c_1\|c_2\|c_3\|c_0,$$
$$C_2 = c_2\|c_0\|c_1\|c_3,$$
$$C_3 = c_3\|c_2\|c_0\|c_1.$$

En variante, on peut simplement former les chiffrés intermédiaires par paires distinctes de chiffrés premiers (paires glissantes). Typiquement, on peut parcourir une file circulaire composée des d+1 chiffrés premiers :

$$C_0 = c_0\|c_1,$$
$$C_1 = c_1\|c_2,$$
$$C_2 = c_2\|c_3,$$
$$C_3 = c_3\|c_0.$$

Chaque ligne des tables définit un profil de concaténation, où chaque chiffré $c_i$ a une position de chiffré dans la concaténation.

Une telle table de concaténation, pour chaque couple (d, k) peut être prévue en mémoire du dispositif.

Ces exemples de table illustrent une approche plus générale selon laquelle au plus $\left\lfloor \frac{n}{2} \right\rfloor$ paires disjointes de profils de concaténation sont symétriques pour un groupe de n messages premiers. Une paire de profils de concaténation est dite symétrique pour le groupe de n messages premiers lorsque ses deux profils de concaténation utilisent les mêmes positions de messages dans la concaténation pour positionner les messages premiers issus du groupe de n messages premiers (le profil peut ne contenir qu'une partie des n messages premiers du groupe, et non l'intégralité). Cette condition est vérifiée pour tout n entre 2 et d. A noter que $\lfloor x \rfloor$ est la partie entière inférieure de x.

Ainsi, on évite d'avoir $\left\lfloor \frac{n}{2} \right\rfloor + 1$ paires dont les deux chiffrés intermédiaires sont identiques et dont par conséquent, les chiffrés infectants correspondants s'annulent par paires lors de la combinaison finale. On garantit ainsi que $2\left(k - \left\lfloor \frac{n}{2} \right\rfloor\right)$ chiffrés infectants ne s'annulent pas lors de cette combinaison, assurant une robustesse contre 2k fautes injectées.

Par exemple, pour d=16, 17 chiffrés premiers $c_i$ et 16 chiffrés intermédiaires $C_j$ sont obtenus. On peut donc vérifier que les profils de concaténation pour obtenir les chiffrés intermédiaires ne sont pas sensibles à deux fautes injectées (n=2) en vérifiant qu'il n'y a pas plus d'une paire de profils de concaténation qui soit symétrique pour deux (n) chiffrés premiers. Dans le cas contraire, deux fautes sur les deux exécutions correspondantes permettraient d'obtenir quatre (ou plus) chiffrés intermédiaires identiques pour les deux paires symétriques et donc d'annuler (en cas de fonction de diffusion identique) les chiffrés infectants correspondants lors de la combinaison par les XORs. Au plus 12 fautes permettraient de court-circuiter les 12 autres XORs et une faute supplémentaire permettrait d'obtenir, via $C_{rec}$, un chiffré fauté, non infecté. Ainsi 15 fautes suffiraient à contourner la contremesure.

On vérifie également que les profils de concaténation ne sont pas sensibles à trois fautes injectées (n=3) en vérifiant qu'il n'y a pas plus d'une paire de profils de concaténation qui soit symétrique pour trois (n) chiffrés premiers. De même pour quatre fautes injectées (n=4) en vérifiant qu'il n'y a pas plus de deux paires de profils de concaténation qui soient symétriques pour quatre (n) chiffrés premiers. Et ainsi de suite jusqu'à d fautes injectées (n=d).

Si d'aventure, $\left\lfloor \frac{n}{2} \right\rfloor + 1$ (ou plus) paires de profils de concaténation étaient symétriques pour un groupe de n chiffrés premiers, il est possible d'apporter la robustesse souhaitée en ajoutant une ou plusieurs paires de chiffrés intermédiaires aux paires existantes, où les chiffrés intermédiaires d'une paire combinent au moins un des chiffrés du groupe avec au moins un des chiffrés premiers hors groupe, selon deux profils distincts.

Par exemple, si $c_0$ appartient audit groupe au contraire de $c_3$, une paire formée des chiffrés intermédiaires $c_0\|c_3$ et $c_3\|c_0$ peut être ajoutée.

Dans une variante simplifiant les opérations de concaténation, et comme illustré sur la Figure, la fonction F de mélange de chiffrés comprend un module de concaténation CONCAT produisant un chiffré maître CM (de longueur (d+1)L bits) concaténant tous les chiffrés premiers $c_0$ à $c_d$ résultant directement des exécutions de l'opération cryptographique.

2k opérations $R_j$ peuvent alors être appliquées au même chiffré maître pour obtenir les chiffrés intermédiaires.

Par exemple, l'opération $R_j$ peut être une fenêtre glissante de sélection de deux chiffrés dans CM (qui opère comme une file circulaire). Ainsi, Ro sélectionne $c_0$ et $c_1$ pour former $C_0$ ($C_0 = c_0 \| c_1$), $R_1$ sélectionne $c_1$ et $c_2$ pour former $C_1$ ($C_1 = c_1 \| c_2$), et ainsi de suite.

En variante, les opérations $R_j$ peuvent être des opérations de rotation, sur un multiple de L bits (longueur de chaque chiffré $c_i$), du chiffré maître CM.

Par exemple, la rotation $R_j$ pour obtenir le chiffré intermédiaire $C_j$ peut consister à décaler les bits du chiffré maître CM vers la gauche de jL bits (i.e. décaler de j chiffrés $c_i$). La rotation Ro est ainsi l'identité : Co=CM.

Dans un autre exemple, $R_{2j}$=Id et $R_{2j+1}$ est une rotation quelconque des bits du chiffré maître CM d'un multiple de L bits (donc rotation d'un ou plusieurs chiffrés $c_i$) différent de l'identité. Ainsi pour chaque paire $p_i$ de chiffrés intermédiaires, on a le chiffré maître $C_{2i}$=CM et un chiffré intermédiaire $C_{2i+1}$ résultant d'une autre concaténation des chiffrés $c_0$ à $c_d$.

Comme ces différents mélanges de chiffrés par rotation ne garantissent pas l'absence de chiffrés intermédiaires identiques en cas de fautes identiques sur plusieurs exécutions de l'opération OPE, les fonctions de diffusions à appliquer peuvent être différentes d'une paire à l'autre. Des exemples de fonctions de diffusion, notamment basés sur une clé de paire et optionnellement sur une clé d'exécution, sont fournis plus haut.

Pour chaque paire $p_i$ ($0 \le i < k$), une même fonction de diffusion $f_{diff\text{-}i}$ est appliquée aux deux chiffrés intermédiaires ($C_{2i}$, $C_{2i+1}$) de la paire. On obtient ainsi deux chiffrés infectants $g_{2i}$ à $g_{2i+1}$ par paire, soit un total de 2k (d si d est pair, d+1 si d est impair) chiffrés infectants $g_0$ à $g_{2k-1}$. Les chiffrés infectants s'annulent donc deux à deux.

Les explications fournies plus haut sur les fonctions de diffusion s'appliquent également à ce mode de réalisation. Par exemple, l'utilisation de générateurs de nombre pseudo-aléatoire basés sur une clé $K_i$ différente d'une paire de chiffrés à l'autre n'est qu'un mode de réalisation de l'invention. D'une façon générale, la fonction de diffusion est différente d'une paire de chiffrés à l'autre. Une ou plusieurs fonctions de diffusion utilisées peuvent être des PRNG alors qu'une ou plusieurs autres peuvent être d'un ou plusieurs autres types, par exemple des fonctions de hachage. Egalement, la clé de paire et/ou la clé d'exécution peuvent être concaténées ou XORed avec le chiffré intermédiaire en entrée de la fonction de diffusion.

Dans certains modes de réalisation, on peut utiliser une même fonction de diffusion pour un sous-ensemble des paires, et cela pour deux ou plus sous-ensembles (les fonctions de diffusion sont différentes d'un sous-ensemble à l'autre). Dans ce cas, on peut s'assurer que les profils de concaténation utilisés au sein de chaque sous-ensemble de paires ne sont pas sensibles à n fautes injectées comme décrit ci-dessus (n étant limité par le nombre de chiffrés intermédiaires composant le sous-ensemble en question).

A noter que dans les modes de réalisation où les fonctions de diffusion reçoivent en entrée des chiffrés de longueur multiple de L (par exemple 2L ou (d+1)L bits dans les exemples ci-dessus), elles génèrent de préférence des chiffrés infectants de longueur L bits. Les fonctions de diffusion utilisées doivent donc pouvoir absorber les multiples (2 ou d+1 dans les exemples) chiffrés en entrée (composant le chiffré intermédiaire). Des fonctions de hachage peuvent donc être typiquement utilisées.

Bien entendu, la sortie des fonctions de diffusion peut être plus longue que L bits auquel cas les combinaisons (XOR 10 et 11) opèrent sur les L bits de poids faible.

Dans l'exemple de la **Figure 9**, le chiffré premier $c_0$ est utilisé comme chiffré recomposé $C_{rec}$ aux fins de la combinaison finale par le XOR 10. Tout autre chiffré premier $c_i$ peut être utilisé à la place, quel que soit le nombre d'exécutions de l'opération OPE.

L'utilisation d'un seul chiffré premier pour $C_{rec}$ simplifie le schéma de la Figure.

En variante, le chiffré recomposé $C_{rec}$ peut être formé en sélectionnant des bits de tout ou partie des chiffrés premiers $c_0$ à $c_d$. Les explications données plus haut sur la fonction de recomposition Rec s'applique également à ce mode de réalisation.

Par exemple, dans la variante des paires glissantes évoquée ci-dessus, le chiffré recomposé $C_{rec}$ est formé à partir de bits ou octets ou chiffrés issus de chiffrés intermédiaires de chaque paire (ou plus généralement ensemble de chiffrés intermédiaires) partageant la même fonction de diffusion.

S'il est détecté que $\left\lfloor \dfrac{n}{2} \right\rfloor$ paires disjointes de profils de concaténation sont symétriques, alors on peut choisir le message recomposé de sorte qu'il ne soit pas uniquement formé par un ou plusieurs desdits n messages premiers du groupe. On peut par exemple choisir un chiffré premier qui n'est pas impliqué dans les symétries entre profils de concaténation. Cette contrainte peut être appliquée pour toute valeur de n, ou seulement lorsque n est pair. De même, elle peut être appliquée pour toute valeur de d, ou seulement lorsque d est pair. En dehors, on peut utiliser un simple chiffré premier en tant que $C_{rec}$.

En l'absence de faute injectée, on retrouve $C_{ree}$=$c_{i,\ i=0...d}$. En présence de faute injectée, $C_{rec}$ est susceptible d'être différent des $c_0$ à $c_d$.

A noter que si la recomposition peut être réalisée par sélection de bits dans les chiffrés premiers $c_0$ à $c_d$, il est également possible de réaliser cette sélection à partir d'un (ou plusieurs) chiffré intermédiaire $C_i$ dans la mesure où ce dernier concatène, dans certains modes de réalisation, tout ou partie des chiffrés premiers $c_0$ à $c_d$.

Les chiffrés infectants $g_0$ à $g_{2k-1}$ et le chiffré recomposé $C_{rec}$ sont ensuite combinés pour obtenir le chiffré de sortie S. Comme illustré, cette combinaison peut être réalisée à l'aide des XOR 10, 11 : S = $g_0 \oplus Rec(c_0, c_1, c_2, ... , c_d) \oplus g_1 \oplus g_2 \oplus ... \oplus g_{2k-1}$.

Bien entendu, les chiffrés infectants peuvent être pris dans un ordre différent. En outre, s'il est préférable d'alterner les chiffrés infectants provenant de différentes paires, on peut tout aussi bien réaliser deux XORs consécutifs avec les deux chiffrés infectants d'une même paire.

De préférence, les étapes suivantes sont réalisées en combinant en premier le chiffré recomposé $C_{rec}$ avec l'un des chiffrés infectants $g_0$ à $g_{2k-1}$ plutôt que de combiner deux ou plus chiffrés infectants entre eux avant d'introduire $C_{rec}$, puis en combinant le résultat de chaque combinaison successive avec chacun des autres chiffrés infectants.

Bien que la présente invention ait été décrite ci-dessus en référence à des modes de réalisation spécifiques, la présente invention n'est pas limitée à ces modes de réalisation spécifiques, et des modifications, qui se trouvent dans la portée de la présente invention, seront visibles pour un homme du métier.

De nombreuses autres modifications et variations s'imposeront à ceux qui sont versés dans l'art en se référant aux modes de réalisation illustratifs ci-dessus, qui ne sont donnés qu'à titre d'exemple et qui ne viennent pas limiter la portée de l'invention, celle-ci étant déterminée uniquement par les revendications annexées. En particulier, les différentes caractéristiques des différents modes de réalisation peuvent être échangés, le cas échéant.

Dans les revendications, le mot "comprenant" n'exclut pas d'autres éléments ou étapes, et l'article indéfini "un" ou "une" n'exclut pas une pluralité. Le simple fait que des caractéristiques différentes sont citées dans des revendications dépendantes mutuellement différentes n'indique pas qu'une combinaison de ces caractéristiques ne peut pas être utilisée avantageusement.

## Revendications

1. Procédé de traitement cryptographique d'un message d'entrée (E) en un message de sortie (S), comprenant les étapes suivantes mises en œuvre par un processeur :

    - exécuter plusieurs fois une même opération cryptographique (OPE) sur le message d'entrée (E) pour obtenir une ou plusieurs paires ($p_i$) de messages intermédiaires ($C_i$),
    - pour chaque paire, appliquer une même fonction de diffusion ($f_{diff-i}$) aux deux messages intermédiaires ($C_{2i}$, $C_{2i+1}$) de la paire pour obtenir deux messages infectants ($g_{2i}$, $g_{2i+1}$), et
    - combiner les messages infectants avec un message recomposé ($C_{rec}$) obtenu par sélection de bits d'un ou plusieurs messages premiers ($c_i$) résultant des exécutions de l'opération cryptographique, pour obtenir le message de sortie (S).

2. Procédé selon la revendication 1, dans lequel la fonction de diffusion ($f_{diff-i}$) est différente d'une paire ($p_i$) de messages intermédiaires à l'autre.

3. Procédé selon la revendication 2, dans lequel la fonction de diffusion ($f_{diff-i}$) d'une paire ($p_i$) est basée sur un premier paramètre (i) spécifique à ladite paire, par exemple un identifiant unique de ladite paire.

4. Procédé selon l'une des revendications précédentes, dans lequel la ou les fonctions de diffusion ($f_{diff-i}$) des paires ($p_i$) sont basées sur un second paramètre qui varie pour l'obtention d'un nouveau message de sortie à partir d'un nouveau message d'entrée.

5. Procédé selon l'une des revendications 1 à 4, dans lequel chaque message intermédiaire ($C_i$) est un message premier ($C_i$) résultant directement d'une des exécutions de l'opération cryptographique (OPE).

6. Procédé selon l'une des revendications 1 à 4, dans lequel chaque message intermédiaire ($C_i$) est un message concaténant, selon un profil de concaténation correspondant, plusieurs ou tous les messages premiers ($C_i$) résultant directement des exécutions de l'opération cryptographique (OPE).

7. Procédé selon la revendication 6, dans lequel des messages intermédiaires ($C_i$) de deux paires ($p_i$) différentes diffèrent entre eux par une rotation ($R_i$) différente des messages premiers au sein d'un même message maître (CM) concaténant tous les messages premiers ($c_i$).

8. Procédé selon la revendication 6, dans lequel les messages intermédiaires ($C_i$) sont formés de paires distinctes de messages premiers ($c_i$).

9. Procédé selon la revendication 6, dans lequel au plus $\left\lfloor \frac{n}{2} \right\rfloor$ paires disjointes de profils de concaténation sont symétriques pour un groupe de n messages premiers, pour tout n entre 2 et d, avec d+1 le nombre total d'exécutions de l'opération cryptographique et $\lfloor x \rfloor$ la partie entière inférieure de x, une paire de profils de concaténation étant dite symétrique pour le groupe de n messages premiers lorsque ses deux profils de concaténation utilisent les mêmes positions de messages dans la concaténation pour positionner les messages premiers issus du groupe de n messages premiers.

10. Procédé selon la revendication 9, dans lequel le message recomposé ($C_{rec}$) n'est pas uniquement formé par un ou plusieurs desdits n messages pre-

miers ($c_i$) du groupe lorsque $\left\lfloor \dfrac{n}{2} \right\rfloor$ paires disjointes de profils de concaténation sont symétriques.

11. Procédé selon l'une des revendications 1 à 10, dans lequel l'étape de combinaison comprend l'application de l'opérateur logique OU EXCLUSIF (10, 11) entre les différents messages infectants ($g_i$) et le message recomposé ($C_{rec}$).

12. Procédé selon la revendication 11, dans lequel l'étape de combinaison comprend une première sous-étape initiale (10) combinant le message recomposé ($C_{rec}$) avec l'un des messages infectants ($g_0$) et une ou plusieurs sous-étapes ultérieures (11) combinant le résultat de la sous-étape initiale avec le ou les autres messages infectants ($g_i$).

13. Procédé selon l'une des revendications 1 à 12, dans lequel le message recomposé ($C_{rec}$) est l'un des messages premiers ($c_i$) résultant directement d'une des exécutions de l'opération cryptographique (OPE).

14. Procédé selon l'une des revendications 1 à 12, dans lequel le message recomposé ($C_{rec}$) est formé de bits issus de plusieurs ou de tous les messages premiers ($c_i$) résultant directement des exécutions de l'opération cryptographique (OPE).

15. Dispositif de traitement cryptographique (40) comprenant un processeur (41) configuré pour :

- exécuter plusieurs fois une même opération cryptographique (OPE) sur un message d'entrée (E) pour obtenir une ou plusieurs paires ($P_i$) de messages intermédiaires ($C_i$),
- pour chaque paire, appliquer une même fonction de diffusion ($f_{diff-i}$) aux deux messages intermédiaires($C_{2i}$, $C_{2i+1}$) de la paire pour obtenir deux messages infectants ($g_{2i}$, $g_{2i+1}$), et
- combiner les messages infectants avec un message recomposé ($C_{rec}$) obtenu par sélection de bits d'un ou plusieurs messages premiers ($c_i$) résultant des exécutions de l'opération cryptographique, pour obtenir un message de sortie (S).

16. Support non transitoire lisible par ordinateur stockant un programme qui, lorsqu'il est exécuté par un processeur d'un dispositif de traitement cryptographique, amène le dispositif de traitement cryptographique à effectuer le procédé selon l'une des revendications 1 à 14.

Fig. 1

Fig. 2

Fig. 3

Fig. 4

Fig. 5

Fig. 6

Fig. 7

Fig. 8

Fig. 9

Europäisches
Patentamt

European
Patent Office

Office européen
des brevets

# RAPPORT DE RECHERCHE EUROPEENNE

Numéro de la demande

EP 22 17 3958

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Jacques Fournier ET AL: "Design and characterisation of an AES chip embedding countermeasures", International Journal of Intelligent Engineering Informatics, 1 janvier 2011 (2011-01-01), page 328, XP055319803, DOI: 10.1504/IJIEI.2011.044101 Extrait de l'Internet: URL:http://hal-emse.ccsd.cnrs.fr/emse-0062 4400/file/HAL_Design_characterisation_of_a n_AES_chip_embedding_countermeasures.pdf | 1,4,5, 11-13, 15,16 | INV. H04L9/00 H04L9/06 G09C1/00 |
| Y | * figures 2,4 * | 2,3 | |
| A | | 6-10,14 | |
| | ----- | | |
| X | BAKSI ANUBHAB ET AL: "To infect or not to infect: a critical analysis of infective countermeasures in fault attacks", JOURNAL OF CRYPTOGRAPHIC ENGINEERING, SPRINGER BERLIN HEIDELBERG, BERLIN/HEIDELBERG, vol. 10, no. 4, 23 mai 2020 (2020-05-23), pages 355-374, XP037282720, ISSN: 2190-8508, DOI: 10.1007/S13389-020-00224-9 [extrait le 2020-05-23] | 1,4,5, 11-13, 15,16 | |
| Y | * figure 1 * | 2,3 | DOMAINES TECHNIQUES RECHERCHES (IPC) |
| A | | 6-10,14 | H04L G09C |
| | ----- | | |
| | -/-- | | |

Le présent rapport a été établi pour toutes les revendications

| Lieu de la recherche | Date d'achèvement de la recherche | Examinateur |
|---|---|---|
| Munich | 7 octobre 2022 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 22 17 3958

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | VICTOR LOMNE ET AL: "On the Need of Randomness in Fault Attack Countermeasures – Application to AES", FAULT DIAGNOSIS AND TOLERANCE IN CRYPTOGRAPHY (FDTC), 2012 WORKSHOP ON, IEEE, 9 septembre 2012 (2012-09-09), pages 85-94, XP032240372, DOI: 10.1109/FDTC.2012.19 ISBN: 978-1-4673-2900-2 | 1,4,5, 11-13, 15,16 | |
| Y | * figure 2 * | 2,3 | |
| A | | 6-10,14 | |
| | ----- | | |
| X | US 2017/359165 A1 (LIU LEIBO [CN] ET AL) 14 décembre 2017 (2017-12-14) | 1,4,5, 11-13, 15,16 | |
| Y | * figure 3 * | 2,3 | |
| A | | 6-10,14 | |
| | ----- | | |
| X | US 10 305 479 B1 (DOLL STEFAN [DE] ET AL) 28 mai 2019 (2019-05-28) | 1,4,5, 11-13, 15,16 | DOMAINES TECHNIQUES RECHERCHES (IPC) |
| Y | * figure 1 * | 2,3 | |
| A | | 6-10,14 | |
| | ----- | | |
| Y | ANUBHAB BAKSI ET AL: "A Novel Duplication Based Countermeasure To Statistical Ineffective Fault Analysis", IACR, INTERNATIONAL ASSOCIATION FOR CRYPTOLOGIC RESEARCH , vol. 20201014:181639 12 octobre 2020 (2020-10-12), pages 1-14, XP061041527, Extrait de l'Internet: URL:http://eprint.iacr.org/2020/1268.pdf [extrait le 2020-10-12] | 2,3 | |
| A | * algorithm 1; figure 4 * | 6-10,14 | |
| | ----- | | |

Le présent rapport a été établi pour toutes les revendications

| Lieu de la recherche | Date d'achèvement de la recherche | Examinateur |
|---|---|---|
| Munich | 7 octobre 2022 | Manet, Pascal |

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 22 17 3958

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07−10−2022

| Document brevet cité au rapport de recherche | Date de publication | Membre(s) de la famille de brevet(s) | Date de publication |
|---|---|---|---|
| US 2017359165 A1 | 14−12−2017 | CN 106130712 A<br>US 2017359165 A1 | 16−11−2016<br>14−12−2017 |
| US 10305479 B1 | 28−05−2019 | CN 110598484 A<br>EP 3582434 A1<br>US 10305479 B1 | 20−12−2019<br>18−12−2019<br>28−05−2019 |

EPO FORM P0460

Pour tout renseignement concernant cette annexe : voir Journal Officiel de l'Office européen des brevets, No.12/82